(19) **Europäisches Patentamt / European Patent Office / Office européen des brevets**

(11) **EP 1 881 744 A1**

(12) **EUROPEAN PATENT APPLICATION**

(43) Date of publication:
**23.01.2008 Bulletin 2008/04**

(51) Int Cl.:
**H05B 41/24** (2006.01)    **H05B 41/282** (2006.01)

(21) Application number: **07252892.0**

(22) Date of filing: **20.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **21.07.2006  JP 2006199816**

(71) Applicant: **ROHM CO., LTD.**
**Kyoto-shi, Kyoto 615-8585 (JP)**

(72) Inventors:
 • **Fukumoto, Kenichi,**
  **c/o Rohm Co. Ltd.**
  **Kyoto 615-8585 (JP)**
 • **Nam, Goang-Woo,**
  **c/o Rohm Co. Ltd.**
  **Kyoto 615-8585 (JP)**

(74) Representative: **McLeish, Nicholas Alistair Maxwell**
**Boult Wade Tennant**
**Verulam Gardens**
**70 Gray's Inn Road**
**London WC1X 8BT (GB)**

(54) **Power supply apparatus using coil**

(57)    A power supply apparatus (100) supplies a power to a plurality of fluorescent lamps (110). An AC power supply unit (20) supplies a common AC voltage Vac to the fluorescent lamps (110a to 110e) . A plurality of coils (10a to 10e) are disposed on respective current paths for the plurality of fluorescent lamps (110a to 110e). A core (12) is formed in a closed loop, and the plurality of coils (10a to 10e) are wound around the core (12) as a winding axis in the same direction.

FIG.1

**Description**

The present invention relates to a power supply apparatus for supplying an AC power to loads such as fluorescent lamps.

Recently, as a substitute for cathode-ray tube (CRT) TVs, thin, wide screen liquid crystal TVs have been widely provided. As a backlight for the liquid crystal TV, a plurality of cold cathode fluorescent lamps (hereinafter, referred to as CCFLs) or a plurality of external electrode fluorescent lamps (hereinafter, referred to as EEFLs) are disposed on a rear surface of a liquid crystal panel on which images are displayed.

An inverter (DC/AC converter) which boosts up a DC voltage of about 12V and outputs an AC voltage is used for driving the fluorescent lamp such as the CCFL and the EEFL. The inverter converts an electric current flowing through the fluorescent lamp to a voltage and feeds the voltage back to a control circuit, so that turning-on and turning-off of a switching element are controlled based on the feedback voltage.

Now, a case where a plurality of CCFLs are driven by using anAC voltage boosted by an inverter is considered. Luminance of each CCFL is determined depending on a current flowing through the CCFL. In order to obtain uniform luminance of the plurality of CCFLs, the currents flowing through the CCFLs need to be equalized. The related technologies are disclosed in Japanese Patent Application Laid-Open Nos. 2003-323994 and International Publication Pamphlet No. 2005/038828.

[Patent Document 1] Japanese Patent Application Laid-Open No. 2003-323994
[Patent Document 2] International Publication Pamphlet No. 2005/038828

In technologies disclosed in the Patent Documents, a plurality of transformers are provided to respective fluorescent lamps. Primary coils of the transformers are connected to the fluorescent lamps, and secondary coils thereof constitute a loop. In such a construction, since the transformers are individually provided to the fluorescent lamps, there is a problem in that an acquisition area is increased. In addition, in order to balance currents flowing the fluorescent lamps, the current flowing through the primary coils are converted into magnetic energy by the transformers provided to the fluorescent lamps, and after that, the magnetic energy is converted into the currents flowing through the secondary coils. Since conversion of electric energy-magnetic energy- electric energy is performed, an error may be generated due to the conversion. For example, a variation in currents of the fluorescent lamps may be generated due to a variation in a ratio of the numbers of winding of the coils.

The present invention has been made in view of above problems. A general purpose of the present invention is to provide a power supply apparatus for supplying a uniform power to a plurality of loads such as fluorescent lamps.

According to an embodiment of the present invention, there is provided a power supply apparatus for supplying a power to a plurality of loads. The power supply apparatus includes: a plurality of coils which are disposed on paths of current flowing through the respective loads; and a core which is formed in a closed loop. In the power supply apparatus, the plurality of coils are wound around the core as a winding axis in the same direction.

According to the embodiment, since the plurality of coils are wound around the common core in the closed loop, currents flowing through the coils can be stabilized according to coil ratios. As a result, the currents flowing through the plurality of loads can be balanced in a desired ratio.

In an embodiment, the power supply apparatus may further include an AC power supply unit which supplies a common voltage to the plurality of loads. The AC power supply unit may adjust the common voltage in a feedback manner, so that a current flowing through any one of the plurality of loads can be equal to a predetermined current value.

In this case, the current flowing through the one load is stabilized, so that currents flowing through other loads can be balanced based on the current by using the plurality of coils and the core. As a result, the currents flowing through all the loads can be stabilized.

The power supply apparatus may include a sensing resistor which is disposed on a path of the current flowing through any one of the plurality of loads. The AC power supply unit may adjust the common voltage supplied to the plurality of loads in a feedback manner, so that a voltage drop across the sensing resistor can be constant.

In an embodiment, the AC power supply unit may adjust the common voltage in a feedback manner, so that a total current flowing through all the loads can be equal to a predetermined current value.

When the total current flowing through all the loads is stabilized, the current can be branched into the plurality of loads with a current ratio where the currents are balanced by using the plurality of coils and the core. As a result, the currents flowing through all the loads can be stabilized.

The AC power supply unit may include a sensing resistor which is disposed on a path of a total-load current flowing through the plurality of loads. The AC power supply unit may adjust the common voltage supplied to the plurality of loads in a feedback manner, so that a voltage drop across the sensing resistor can be constant.

The AC power supply unit may be an inverter which converts an input DC voltage to an AC voltage and outputs the AC voltage.

According to another embodiment of the present invention, there is provided a light emitting apparatus. The light emitting apparatus includes a plurality of fluorescent lamps; and the aforementioned power supply apparatus which supplies a power to the plurality of fluorescent lamps which are the plurality of loads.

According to the embodiment, currents flowing through the plurality of fluorescent lamps can be uniform. The fluorescent lamps may be cold cathode fluorescent lamps or external electrode fluorescent lamps.

The plurality of fluorescent lamps may constitute a backlight which is disposed on a rear surface of a liquid crystal panel.

According to still another embodiment of the present invention, there is provided an electronic apparatus. The electronic apparatus includes a liquid crystal panel; and a light emitting apparatus which is disposed as a backlight on a rear surface of the liquid crystal panel.

According to the embodiment, luminance of the backlight can be uniform, so that it is possible to improve visibility of the liquid crystal panel.

According to further still another embodiment of the present invention, there is provided a current balancing transformer. The current balancing transformer includes: a core which is formed in a closed loop; a plurality of coils which are wound around the core as a common winding axis; and external terminals which are provided to each of the plurality of coils.

According to the embodiment, since the plurality of loads are connected to the external terminals, currents flowing through the loads can be balanced according to winding ratios of the coils.

It is to be noted that any arbitrary combination or rearrangement of the above-described structural components and so forth is effective as and encompassed by the present embodiments.

Moreover, this summary of the invention does not necessarily describe all necessary features so that the invention may also be a sub-combination of these described features.

Embodiments will now be described, by way of example only, with reference to the accompanying drawings which are meant to be exemplary, not limiting, and wherein like elements are numbered alike in several Figures, in which :

Fig. 1 is a circuit diagram illustrating a construction of a light emitting apparatus according to an embodiment of the present invention;
Fig. 2 is a block diagram illustrating a construction of a liquid crystal TV provided with the light emitting apparatus of Fig. 1;
Fig. 3 is a view illustrating a construction of a current balancing transformer where coils are wound around a core; and
Fig. 4 is a circuit diagram illustrating an example of a construction of an AC power supply unit according to the embodiment.

The invention will now be described based on preferred embodiments which do not intend to limit the scope of the present invention but exemplify the invention. All of the features and the combinations thereof described in the embodiment are not necessarily essential to the invention.

In the specification, a construction "a member A is connected to a member B" includes a case where the member A is directly connected to the member B physically and a case where the member A is indirectly connected to the member B through another member which does not exert an influence to an electrical connection state.

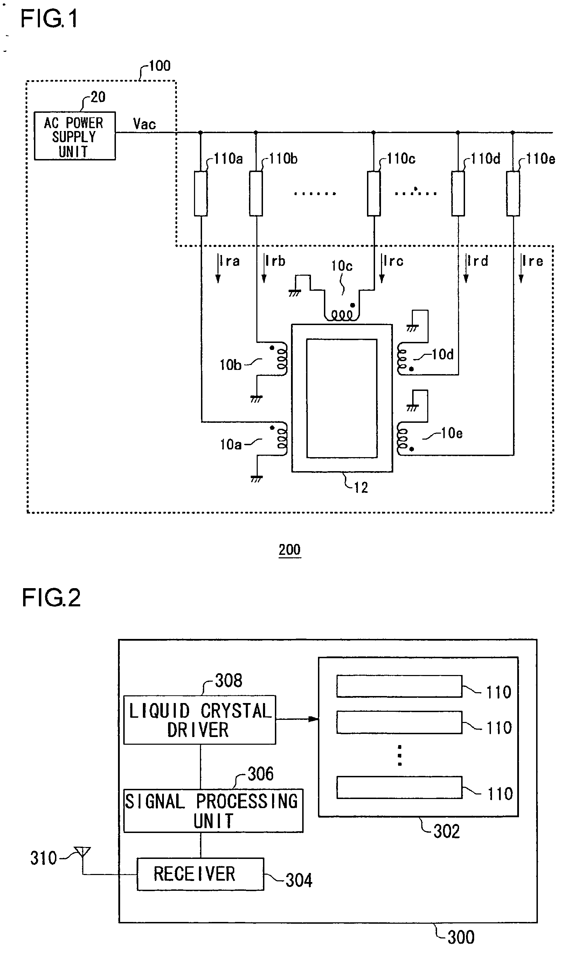

Fig. 1 is a circuit diagram illustrating a construction of a light emitting apparatus 200 according to an embodiment of the present invention. The light emitting apparatus 200 according to the embodiment is used as a backlight for a liquid crystal panel. Fig. 2 is a block diagram illustrating a construction of a liquid crystal TV 300 provided with the light emitting apparatus 200 of Fig. 1. The usage of the light emitting apparatus 200 according to the embodiment is not limited to the liquid crystal TV, but it maybe used for an electronic apparatus such as a notebook personal computer.

Referring to Fig. 2, the liquid crystal TV 300 is connected to an antenna 310. The antenna 310 receives a broadcasting wave and outputs a received signal to a receiver 304. The receiver 304 detects and amplifies the received signal and outputs the received signal to a signal processing unit 306. The signal processing unit 306 outputs to a liquid crystal driver 308 an image data which can be obtained by demodulating a modulated data. The liquid crystal driver 308 outputs the image data to a liquid crystal panel 302 through each scan line to display an image. As a backlight, a plurality of fluorescent lamps 110 are disposed on a rear surface of the liquid crystal panel 302. A power supply apparatus according to the embodiment described below is used for supplying a power to the plurality of fluorescent lamps 110.

Now, a construction and operations of the power supply apparatus 100 according to the embodiment are described in detail with reference again to Fig. 1.

The light emitting apparatus 200 according to the embodiment includes the power supply apparatus 100 and the plurality of fluorescent lamps 110a to 110e which are provided as loads for the power supply apparatus. Hereinafter, the fluorescent lamps 110a to 110e may be collectively referred to as fluorescent lamps 110 if needed. For example, the fluorescent lamps 110 may be CCFLs or EEFLs. In the embodiment, the case where five fluorescent lamps are provided is described. However, the present invention is not limited thereto, but any number of fluorescent lamps 110 may be used.

The fluorescent lamps 110 are disposed on the rear surface of the liquid crystal panel of Fig. 2. The power supply apparatus 100 supplies a power to the plurality of fluorescent lamps 110. For example, the power supply apparatus generates an AC voltage of 1000V or more to supply the AC voltage to the fluorescent lamps 110. Luminance of each of the fluorescent lamps 110 is determined based on a current flowing through each of the fluorescent lamps. A variation in driving currents (hereinafter, refereed to as lamp currents Ir) causes an irregularity of luminance of the backlight. For this reason, the power supply apparatus 100 is required to uniformly drive the plurality of fluorescent lamps 110.

The power supply apparatus 100 according to the embodiment includes a plurality of coils 10a to 10e, a core 12, and an AC power supply unit 20.

One-side terminals of the to-be-driven fluorescent lamps 110a to 110e are commonly connected to each other. The AC power supply unit 20 supplies an AC voltage Vac as a common driving voltage to the commonly-connected one-side terminals of the fluorescent lamps 110a to 110e. For example, the AC power supply unit 20 may be an inverter which converts an input DC voltage Vdc (for example, a power supply voltage) to the AC voltage Vac and outputs the AC voltage. As the AC power supply unit such as an inverter, those which are well known in the related art may be employed.

The plurality of coils 10a to 10e are provided to the fluorescent lamps 110a to 110e, respectively. The coils 10a to 10e are connected to terminals that are opposite to the commonly-connected one-side terminals of the plurality of fluorescent lamps 110a to 110e, so that the coils are disposed on paths of currents flowing through the fluorescent lamps 110a to 110e.

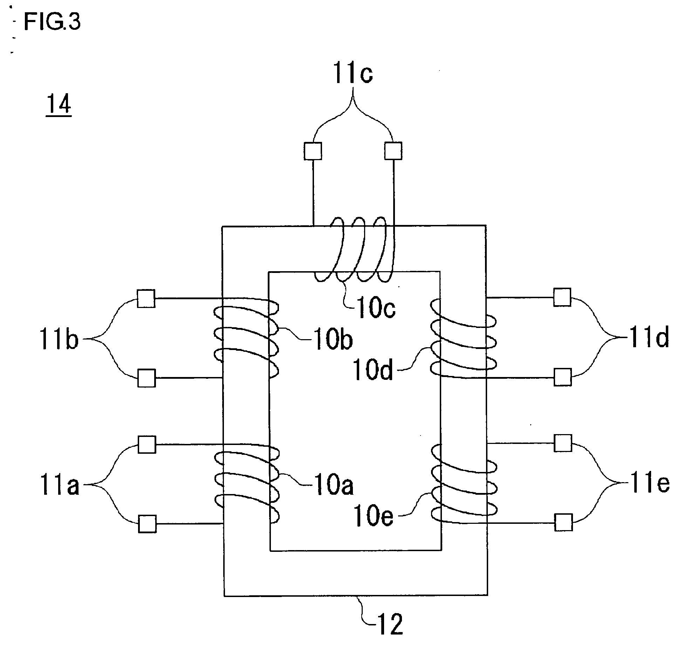

The core 12 is formed in a closed loop. The core 12 may be constructed with a material used for a typical transformer. Fig. 3 is a view illustrating a construction of a current balancing transformer 14 where coils 10a to 10e are wound around the core 12. The plurality of coils 10a to 10e are wound around the core 12, so that directions of magnetic fields generated by currents flowing through the coils can be the same in the inner portion of the core 12. Since the currents flowing through the fluorescent lamps 110 are AC currents, directions of the currents flowing through the coils 10 are varied according to the AC voltage Vac. External terminals 11a to 11e are provided to both ends of the respective coils 10a to 10e.

Now, operations of the light emitting apparatus 200 having the aforementioned construction are described. When the AC power supply unit 20 generates the AC voltage Vac as a common driving voltage for the fluorescent lamps 110a to 110e, the fluorescent lamps 110a to 110e are driven by the AC voltage Vac, so that lamp currents Ira to Ire flow through the respective fluorescent lamps 110a to 110e. The lamp currents Ira to Ire flow into the coils 10a to 10e connected to the fluorescent lamps 110a to 110e, respectively.

A magnetic field H generated by each of the coils 10 is determined according to the number n of windings of the corresponding coil and the coil current, that is, the corresponding lamp current Ir as follows.

$$H = n \cdot Ir$$

In the current balancing transformer 14 of Fig. 3, since the magnetic fields Ha to He are generated by the coils 10a to 10e in a closed loop, the magnetic fields Ha to He are equal to each other. Therefore, the following equation is satisfied with respect to the light emitting apparatus 200 of Fig. 1.

$$n_a \cdot Ira = n_b \cdot Irb = n_c \cdot Irc = n_d \cdot Ird = n_e \cdot Ire$$

Here, $n_a$ to $n_e$ denote the numbers of winding of the respective coils 10a to 10e. Therefore, in the light emitting apparatus 200 according to the embodiment, the currents flowing through the coils 10, that is, the lamp currents Ir can be balanced according the numbers of winding of the coils 10. For example, in a case where the numbers of winding of the coils 10 are equalized, the lamp currents Ira to Ire can be equalized, that is, balanced.

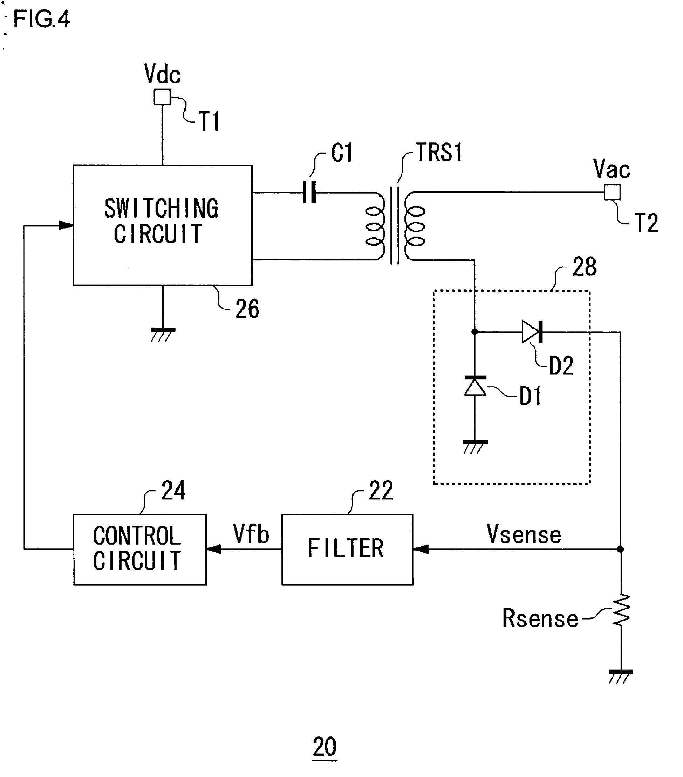

Fig. 4 is a circuit diagram illustrating an example of a construction of the AC power supply unit 20 according to the embodiment. The AC power supply unit 20 is an inverter which converts an input DC voltage Vdc of an input terminal T1 to an AC voltage Vac and outputs the AC voltage to an output terminal T2. The AC power supply unit 20 includes a transformer TRS1, a filter 22, a control circuit 24, a switching circuit 26, a rectifier circuit 28, a sensing resistor Rsense, and a capacitor C1.

The AC power supply unit 20 adjusts the common AC voltage Vac in a feedback manner, so that a current ΣIr flowing through all the fluorescent lamps 110 can be equal to a predetermined current value Itotal. The total-load current ΣIr is supplied to the plurality of fluorescent lamps 110 through a secondary coil of the transformer TRS1. Since the AC power supply unit 20 of Fig. 4 includes the sensing resistor Rsense on the path of the total-load current Σlr, that is, a path of the secondary coil of the transformer TRS1, the AC power supply unit 20 can adjust the AC voltage Vac in the feedback manner, so that a voltage drop across the sensing resistor Rsense can be constant.

In the transformer TRS1, the one end of the secondary coil is connected to the output terminal T2, and the other end thereof is connected to the rectifier circuit 28. The rectifier circuit 28 includes two diodes D1 and D2. The anode of the diode D1 is grounded, and the cathode thereof is connected to the secondary coil of the transformer TRS1. The anode of the diode D2 is connected to the cathode of the diode D1, and the cathode thereof is connected to the sensing resistor Rsense.

A current flowing through the secondary coil of the transformer TRS1 becomes a sum Σlr of the lamp currents Ira to Ire flowing through the respective fluorescent lamps 110a to 110e that are the loads. Since the lamp currents Ira to Ire are AC currents, the lamp currents are rectified by the rectifier circuit 28, so that current components flowing from the fluorescent lamps 110 to the AC power supply unit 20 are extracted. When the extracted currents flow through the sensing resistor Rsense, a voltage drop is generated across the sensing resistor. The voltage drop is input as a sensed voltage Vsense to the filter 22. The filter 22 smoothes the sensed voltage Vsense and outputs a feedback voltage Vfb to the control circuit 24. The control circuit 24 controls the switching circuit 26, so that the feedback voltage Vfb can be equal to a predetermined reference voltage Vref. The switching circuit 26 may be, for example, an H bridge circuit or a half bridge circuit and include a plurality of switching transistors. The control circuit 24 controls a duty ratio between on and off time intervals of each of the switching transistors through pulse width modulation or the like so as to control the current flowing through the primary coil of the transformer TRS1. The capacitor C1 is of a DC blocking type. By controlling the current flowing through the primary coil of the transformer TRS1, a value of the AC voltage Vac appearing at the output terminal T2 can be controlled. The construction of the AC power supply unit 20 illustrated in Fig. 4 is an exemplary one, and thus, other types of inverter can be used as the AC power supply unit. Moreover, the AC power supply unit 20 is not limited to the inverter which performs DC-AC conversion, but an inverter which performs AC-DC-AC conversion may be used as the AC power supply unit.

In the light emitting apparatus 200 having the aforementioned construction according to the embodiment, the AC voltage Vac is generated so that the sum Σlr of the currents Ira to Ire flowing through the plurality of fluorescent lamps 110 can be equal to a constant value Itotal. As a result, the total current Itotal is branched into the coils 10a to 10e in a balancing manner according to the numbers n of winding thereof, so that the lamp currents Ira to Ire flowing through the fluorescent lamps 110a to 110e can be stabilized. If the numbers n of winding of the coils 10a to 10e are equal to each other, a current of Itotal/5 flows through each of the fluorescent lamps 110, so that the luminance can be uniform. In addition, by finely adjusting the number n of winding of each of the coils, the luminance can be adjusted according to a positional relation between the fluorescent lamps 110 and the liquid crystal panel.

In addition, in the light emitting apparatus 200 according to the embodiment, since a single current balancing transformer 14 can be sufficiently used to balance the lamp currents Ir flowing through the plurality of fluorescent lamps 110, it is possible to reduce the number of parts and to easily design the light emitting apparatus.

In addition, in the light emitting apparatus 200 according to the embodiment, since the coil currents Ir are balanced in the state that the coil currents Ir are converted into the magnetic field (magnetic energy) one time, two stages of energy conversion, that is, (1) conversion of a current to a magnetic field and (2) conversion of a magnetic field to a current in the prior art are unnecessary, so that efficiency can be improved.

In addition, according to the embodiment, since the magnetic fields are balanced by performing the conversion of the magnetic field to the current one time, it is possible to increase a circuit response speed in comparison with a case where the balance is maintained by using a current obtained by performing the conversion two times. Since the circuit response speed corresponds to a response capability of feedback control, it is possible to reduce a time to stabilize the luminance of the fluorescent lamps 110.

It is understood by the person skilled in the art that the embodiment is illustrative, combinations of the components and processes can be variously modified, and the modifications are within the scope of the present invention.

In the AC power supply unit 20 of Fig. 4, although the AC voltage Vac is generated so as to maintain the sum Σlr of the lamp currents Ira to Ire in a constant value, control may be performed so as to maintain any one of the lamp currents Ir in a constant value. For example, in a case where the lamp current Ira of the fluorescent lamp 110a is designed to be stabilized, one end of the transformer TRS1 may be directly grounded without connection of the rectifier circuit 28 and the sensing resistor Rsense, but the rectifier circuit 28 and the sensing resistor Rsense may be provided between the coil 10a and the ground. As a result, the lamp current Ira can be stabilized in the constant value. When the lamp current Ira is stabilized, the currents Irb to Ire flowing through the coils 10b to 10e are stabilized so as to be currents according to coil ratios of the coils to the coils 10a.

In addition, the loads driven by the power supply apparatus 100 according to the embodiment is not limited to the fluorescent tubes, but various devices may be driven by the power supply apparatus.

While the preferred embodiments of the present invention have been described using specific terms, such description is for illustrative purposes only, and it is to be understood that changes and variations may be made without departing from the spirit or scope of the appended claims.

**Claims**

1. A power supply apparatus (100) for supplying a power to a plurality of loads (110a-110e), comprising:

   a plurality of coils (10a-10e) which are disposed on paths of current flowing through the respective loads (110a-110e) ; and
   a core (12) which is formed in a closed loop, wherein
   the plurality of coils (10a-10e) are wound around the core (12) as a winding axis in the same direction.

2. The power supply apparatus (100) according to claim 1, further comprising an AC power supply unit (20) which supplies a common voltage to the plurality of loads (110a-110e),
   wherein
   the AC power supply unit (20) adjusts the common voltage (Vac) in a feedback manner, so that a current flowing through any one of the plurality of loads can be equal to a predetermined current value.

3. The power supply apparatus (100) according to claim 2, further comprising a sensing resistor (Rsense) which is disposed on a path of the current flowing through any one of the plurality of loads (110a-110e), wherein
   the AC power supply unit (20) adjusts the common voltage (Vac) supplied to the plurality of loads (110a-110e) in a feedback manner, so that a voltage drop across the sensing resistor (Rsense) can be constant.

4. The power supply apparatus (100) according to claim 1, further comprising an AC power supply unit (20) which supplies a common voltage (Vac) to the plurality of loads (110a-110e),
   wherein the AC power supply unit (20) adjusts the common voltage (Vac) in a feedback manner, so that a total current flowing through all the loads can be equal to a predetermined current value.

5. The power supply apparatus (100) according to claim 4, wherein
   the AC power supply unit (20) includes a sensing resistor (Rsense) which is disposed on a path of a total-load current supplied to the plurality of loads (110a-110e), and
   the AC power supply unit (20) adjusts the common voltage (Vac) supplied to the plurality of loads (110a-110e) in a feedback manner, so that a voltage drop across the sensing resistor (Rsense) can be constant.

6. The power supply apparatus (100) according to any one of claims 2 to 5, wherein
   the AC power supply unit (20) is an inverter which converts an input DC voltage to an AC voltage and outputs the AC voltage.

7. A light emitting apparatus (200) comprising:

   a plurality of fluorescent lamps (110a-110e); and
   the power supply apparatus (100) according to any one of claims 1 to 5, which supplies a power to the plurality of fluorescent lamps which are the plurality of loads.

8. The light emitting apparatus (200) according to claim 7, wherein
   the fluorescent lamps (110a-110e) are cold cathode fluorescent lamps.

9. The light emitting apparatus (200) according to claim 7, wherein
   the fluorescent lamps (110a-110e) are external electrode fluorescent lamps.

10. The light emitting apparatus (200) according to claim 7, wherein
    the plurality of fluorescent lamps (110a-110e) constitutes a backlight which is disposed on a rear surface of the liquid crystal panel (302).

11. An electronic apparatus (300) comprising:

    a liquid crystal panel (302); and
    the light emitting apparatus (200) according to claim 10, which is disposed as a backlight on a rear surface of the liquid crystal panel (302).

12. A current balancing transformer (14) comprising:

a core (12) which is formed in a closed loop;
a plurality of coils (10a-10e) which are wound around the core as a common winding axis; and
external terminals (11a-11e) which are provided to each of the plurality of coils (10a-10e).

FIG.1

200

FIG.2

FIG.3

14

11c

11b

10c

10b

11d

10d

11a

10a

10e

11e

12

FIG.4

| European Patent Office | EUROPEAN SEARCH REPORT | Application Number EP 07 25 2892 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/001524 A1 (LIN WEI-HONG [TW] ET AL) 2 January 2003 (2003-01-02) | 1,2,4, 6-8, 10-12 | INV. H05B41/24 H05B41/282 |
| Y | * page 1, paragraph 2; figures 3-7 * * page 1, paragraph 20 - page 2, paragraph 25 * | 3,5,9 | |
| X | EP 1 517 591 A (USHIJIMA MASAKAZU [JP]; CHEN HONG FEI [TW]) 23 March 2005 (2005-03-23) | 1,2,4, 6-8, 10-12 | |
| Y | * page 2, paragraph 2; figures 1-15 * * page 6, paragraph 48 - page 7, paragraph 63 * * page 8, paragraph 67 - page 15, paragraph 149 * | 3,5,9 | |
| X | US 2005/023998 A1 (LEE SHENG TAI [TW]) 3 February 2005 (2005-02-03) | 1-8,12 | |
| Y | * page 1, paragraphs 2,9 - page 2, paragraph 14; figures 5A,5B * * page 2, paragraph 34 - page 3, paragraph 42 * | 9 | |
| | | | **TECHNICAL FIELDS SEARCHED (IPC)** |
| X | JP 08 006020 A (CANON KK) 12 January 1996 (1996-01-12) | 1,7, 10-12 | H05B |
| Y | * abstract; figures 1,2 * | 9 | |
| D,Y | JP 2003 323994 A (MATSUSHITA ELECTRIC IND CO LTD) 14 November 2003 (2003-11-14) * abstract; figures 1-9 * | 3,5 | |
| Y | US 2006/119293 A1 (CHAN CHUN-KONG [TW] ET AL) 8 June 2006 (2006-06-08) * page 3, paragraph 30 * | 9 | |

The present search report has been drawn up for all claims

| Place of search | Date of completion of the search | Examiner |
|---|---|---|
| Munich | 25 October 2007 | Brosa, Anna-Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 881 744 A1**

**ANNEX TO THE EUROPEAN SEARCH REPORT
ON EUROPEAN PATENT APPLICATION NO.**

EP 07 25 2892

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2007

| Patent document cited in search report | | | Publication date | Patent family member(s) | | | Publication date |
|---|---|---|---|---|---|---|---|
| US 2003001524 | A1 | | 02-01-2003 | JP | 2003031383 | A | 31-01-2003 |
| | | | | TW | 256860 | B | 11-06-2006 |
| EP 1517591 | A | | 23-03-2005 | CN | 1551704 | A | 01-12-2004 |
| | | | | JP | 2004335443 | A | 25-11-2004 |
| | | | | KR | 20040073320 | A | 19-08-2004 |
| US 2005023998 | A1 | | 03-02-2005 | NONE | | | |
| JP 8006020 | A | | 12-01-1996 | JP | 3720390 | B2 | 24-11-2005 |
| JP 2003323994 | A | | 14-11-2003 | NONE | | | |
| US 2006119293 | A1 | | 08-06-2006 | NONE | | | |

EPO FORM P0459

For more details about this annex : see Official Journal of the European Patent Office, No. 12/82

**EP 1 881 744 A1**

## REFERENCES CITED IN THE DESCRIPTION

### Patent documents cited in the description

- JP 2003323994 A

- WO 2005038828 A